(19) Europäisches Patentamt
European Patent Office
Office européen des brevets

(11) EP 3 310 858 B1

(12) **EUROPÄISCHE PATENTSCHRIFT**

(45) Veröffentlichungstag und Bekanntmachung des Hinweises auf die Patenterteilung:
**20.02.2019 Patentblatt 2019/08**

(21) Anmeldenummer: **15735642.9**

(22) Anmeldetag: **18.06.2015**

(51) Int Cl.:
***C08L 69/00*** *(2006.01)*

(86) Internationale Anmeldenummer:
**PCT/EP2015/063769**

(87) Internationale Veröffentlichungsnummer:
**WO 2016/202399 (22.12.2016 Gazette 2016/51)**

(54) **FLAMMGESCHÜTZE POLYCARBONAT-POLYESTER-ZUSAMMENSETZUNGEN**
FLAME-RETARDANT POLYCARBONATE-POLYESTER COMPOSITIONS
COMPOSITIONS IGNIFUGES DE POLYCARBONATE-POLYESTER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.04.2018 Patentblatt 2018/17**

(73) Patentinhaber: **Covestro Deutschland AG**
**51373 Leverkusen (DE)**

(72) Erfinder:
- **JUNG, Mathieu**
  **Shanghai 200031 (CN)**
- **HUFEN, Ralf**
  **47239 Duisburg (DE)**
- **ECKEL, Thomas**
  **41540 Dormagen (DE)**

(74) Vertreter: **Levpat**
**c/o Covestro AG**
**Gebäude 4825**
**51365 Leverkusen (DE)**

(56) Entgegenhaltungen:
**EP-A1- 2 706 090**
**WO-A1-2015/065611**
**US-A1- 2009 209 695**
**US-A1- 2013 317 142**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 310 858 B1

**Beschreibung**

Die vorliegende Erfindung betrifft flammgeschützte Polycarbonat/Polyester -Zusammensetzungen mit hoher Reißdehnung und guter Chemikalienbeständigkeit, wobei als Flammschutzmittel Phosphazene eingesetzt werden und wobei der Polyester aus Bernsteinsäure und optional weiteren Dicarbonsäuren sowie aliphatischen, cycloaliphatischen, araliphatischen oder aromatischen Diolen abgeleitet ist sowie die Verwendung dieser flammgeschützten Polycarbonat/Polyester-Zusammensetzungen zur Herstellung von Formkörpern und die Formkörper selbst.

JP 7324159 A2 beschreibt eine Polycarbonat-Zusammensetzung mit einem aliphatischen Polyester, die eine verbesserte Fließfähigkeit bei erhaltenen mechanischen Eigenschaften aufweisen. Es werden aber keine Angaben zur Chemikalienbeständigkeit offenbart. Als aliphatische Polyester werden Polyethylensuccinat und Polybutylensuccinat genannt, nicht aber mit Phosphazenen als Flammschutzmittel ausgerüstete Polycarbonat-Zusammensetzungen enthaltend Polyester der Bernsteinsäure.

JP 2011-016960 A beschreibt eine Zusammensetzung aus Polycarbonat, aliphatischen Polyester und einem Ethylen-Glycidylmethacrylat Copolymer und Styrol polymer. Als bevorzugter aromatischer Polyester wird Polybutylensuccinat genannt. Durch das Copolymer wird die Zähigkeit verbessert. Es werden aber keine Hinweise auf verbesserte Chemikalienbeständigkeit und Reißdehnung gegeben. Flammgeschützte Zusammensetzungen werden ebenfalls nicht offenbart.

JP 2005-008671 A beschreibt Zusammensetzungen aus Polycarbonat und aliphatischen Polyestercarbonate, die sich durch gute Reißfestigkeit und Verarbeitbarkeit sowie Bioabbaubarkeit auszeichnen. Das Polyestercarbonat wird durch eine Reaktion von oligomeren Butylensuccinat mit Diphenylcarbonat hergestellt. Es werden aber keine Hinweise auf verbesserte Chemikalienbeständigkeit gegeben. Flammgeschützte Zusammensetzungen werden ebenfalls nicht offenbart.

US 2011/009531 A1 beschreibt die Herstellung von aliphatischen Polyestern basierend auf nachwachsenden Rohstoffen und deren möglichen Zusammensetzung mit technischen Kunststoffen. Es werden aber keine Hinweise auf Verbesserungen der Chemikalienbeständigkeit gegeben. Polycarbonat-Zusammensetzungen enthaltend Polyester der Bernsteinsäure und ausgerüstet mit Phosphazenen als Flammschutzmittel werden ebenfalls nicht offenbart.

US 2009/209695 A1 beschreibt Mischungen aus Polycarbonat, aliphatischen Polyestern und optional Polymilchsäure. Als Polyester wird besonders Polybutylensuccinat offenbart. Es werden gute mechanische Eigenschaften, Fließfähigkeit und Wärmeformbeständigkeit beschrieben. Verbesserte Chemikalienbeständigkeit wird aber nicht genannt. Polycarbonat Polycarbonat-Zusammensetzungen enthaltend Polyester der Bernsteinsäure und ausgerüstet mit Phosphazenen als Flammschutzmittel werden ebenfalls nicht offenbart.

EP 0707047 A2 beschreibt Formkörper hergestellt aus verzweigten und unverzweigten Bernsteinsäurepolyestern. Es werden jedoch keine Zusammensetzungen enthaltend Polycarbonate als weiteren Thermoplasten und auch keine Informationen zu Reißdehnung und Chemikalienbeständigkeit offenbart.

In der US 2013/317142 A1 werden flammgeschützte Polycarbonatzusammensetzungen beschrieben, die Polyester und zyklische Phosphazene enthalten.

Während Kunststoffe zunehmend Metalle und Holz in vielen Bereichen der Technik und des täglichen Lebens ersetzten und intensiv an der Verbesserung ihrer Eigenschaften sowie an der Erschließung neuer Anwendungsgebiete gearbeitet wird, basiert ein großer Teil dieser Kunststoffe aber auf nicht nachwachsenden Rohstoffen, wie Erdöl, deren Vorräte begrenzt sind.

In den vergangen Jahren wurden daher einerseits Verfahren zum Recycling von Kunststoffen, andererseits Kunststoffe auf Basis nachwachsender Rohstoffe, z.B. Polymilchsäure (PLA) oder Polybutylensuccinat (PBS) entwickelt.

Aus den oben genannten Dokumenten sind auch Zusammensetzungen enthaltend Kunststoffe aus nachwachsenden Rohstoffen und Polycarbonat bekannt.

Diese Polycarbonat-Zusammensetzungen müssen wir bestimmte Anwendungen flammgeschützt ausgerüstet werden und eine erhöhte Beständigkeit gegen Chemikalien aufweisen. Das Problem dabei ist jedoch, dass sich die mechanischen Eigenschaften durch Zugabe von Flammschutzmitteln, die üblicherweise für Polycarbonat-Zusammensetzungen verwendet werden, verschlechtern.

Aufgabe der vorliegenden Erfindung ist daher die Bereitstellung von flammgeschützten Polycarbonat-Zusammensetzungen mit Polyestern, welche Bernsteinsäure als Monomerbaustein (Dicarbonsäure) enthalten mit einer Kombination aus erhöhter Reißdehnung und exzellenter Chemikalienbeständigkeit. Es wurde nun überraschend gefunden, dass die Zusammensetzungen bzw. Formmassen enthaltend Polycarbonat, Polyester welche Bernsteinsäure als Monomerbaustein (Dicarbonsäure) enthalten und Phosphazene als Flammschutzmittel zu Blends mit den gewünschten Eigenschaften führen.

Die Zusammensetzungen der vorliegenden Erfindung enthalten

A) mindestens ein Polymer ausgewählt aus der Gruppe bestehend aus aromatisches Polycarbonat und aromatisches Polyestercarbonat,

B) mindestens ein Polyester, wobei der Polyester aus Bernsteinsäure und optional weiteren Dicarbonsäuren sowie aliphatischen, cycloaliphatischen, araliphatischen oder aromatischen Diolen abgeleitet ist,
C) mindestens ein cyclisches Phosphazen der Struktur (IV)

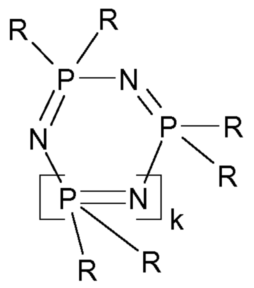

(IV),

wobei

R jeweils gleich oder verschieden ist und für

- einen Aminrest,
- jeweils gegebenenfalls halogeniertes $C_1$- bis $C_8$-Alkyl,
- $C_1$- bis $C_8$- Alkoxy
- jeweils gegebenenfalls durch Alkyl und/oder Halogen substituiertes $C_5$- bis $C_6$-Cycloalkyl,
- jeweils gegebenenfalls durch Alkyl und/oder Halogen und/oder Hydroxysubstituiertes, $C_6$- bis $C_{20}$-Aryloxy
- jeweils gegebenenfalls durch Alkyl und/oder Halogen und/oder Brom, substituiertes $C_7$- bis $C_{12}$-Aralkyl
- einen Halogen-Rest oder
- einen OH-Rest steht,

k für 1 oder eine ganze Zahl von 1 bis 10 steht,

D) optional Pfropfpolymerisat,
E) optional Vinyl(Co)Polymerisat und/oder Polyalkylenterephthalat,
F) optional Zusatzstoffe.

In einer weiteren Ausführungsform enthaltend die Zusammensetzungen

A) 40 bis 98 Gew.-Teile, vorzugsweise 45 bis 90 Gew.-Teile, besonders bevorzugt 50 bis 85 Gew.-Teile mindestens eines Polymers ausgewählt aus der Gruppe bestehend aus aromatisches Polycarbonat und aromatisches Polyestercarbonat,
B) 1 bis 60 Gew.-Teile, vorzugsweise 3 bis 50 Gew.-Teile, weiter bevorzugt 5 bis 45 Gew.-Teile, Polyester, wobei der Polyester aus Bernsteinsäure und optional weiteren Dicarbonsäuren sowie aliphatischen, cycloaliphatischen, araliphatischen oder aromatischen Diolen abgeleitet ist,
C) 1 bis 20 Gew.-Teile, vorzugsweise 2 bis 15 Gew.-Teile, weiter bevorzugt 3 bis 12 Gew.-Teile, mindestens eines cyclischen Phosphazens der Struktur (IV),

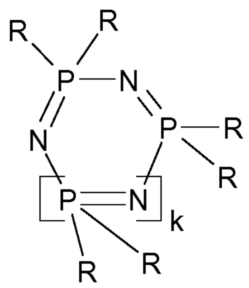

(IV),

wobei

k für 1 oder eine ganze Zahl von 1 bis 10, vorzugsweise für eine Zahl von 1 bis 8, besonders bevorzugt 1 bis 5, steht, mit einem Trimerenanteil (k=1) von 50 bis 98 mol.-%" weiter bevorzugt von 60 bis 95 mol.-%, besonders bevorzugt von 65 bis 90 mol.-%, und ganz besonders bevorzugt von 65 - 85 mol.-%, insbesondere 70 - 85 mol.-%, bezogen auf die Komponente C,

und wobei

R jeweils gleich oder verschieden ist und für einen Aminrest, jeweils, gegebenenfalls halogeniertes, vorzugsweise mit Fluor halogeniertes, $C_1$- bis $C_8$-Alkyl, vorzugsweise Methyl, Ethyl, Propyl oder Butyl, $C_1$- bis $C_8$- Alkoxy, vorzugsweise Methoxy, Ethoxy, Propoxy oder Butoxy, jeweils gegebenenfalls durch Alkyl, vorzugsweise $C_1$-$C_4$-Alkyl, und/oder Halogen, vorzugsweise Chlor und/oder Brom, substituiertes $C_5$-bis $C_6$-Cycloalkyl, jeweils gegebenenfalls durch Alkyl, vorzugsweise $C_1$-$C_4$-Alkyl, und/oder Halogen, vorzugsweise Chlor, Brom und/oder Hydroxy-substituiertes, $C_6$-bis $C_{20}$-Aryloxy, vorzugsweise Phenoxy, Naphthyloxy, jeweils gegebenenfalls durch Alkyl, vorzugsweise $C_1$-$C_4$-Alkyl, und/oder Halogen, vorzugsweise Chlor und/oder Brom, substituiertes $C_7$- bis $C_{12}$-Aralkyl, vorzugsweise Phenyl-$C_1$-$C_4$-alkyl, oder einen Halogen-Rest, vorzugsweise Chlor, oder einen OH-Rest steht.

D) 0 bis 20 Gew.-Teile, bevorzugt 0 bis 15 Gew.-Teile, besonders bevorzugt 0 bis 10 Gew.-Teile Pfropfpolymerisat,
E) 0 bis 20 Gew.-Teile, bevorzugt 0 bis 15 Gew.-Teile, besonders bevorzugt 0 bis 10 Gew.-Teile Vinyl(Co)Polymerisat und/oder Polyalkylenterephthalat,
F) 0 bis 30 Gew.-Teile, bevorzugt 0,1 bis 15,0 Gew.-Teile , besonders bevorzugt 0,2 bis 10, Gew.-Teile Zusatzstoffe,

und wobei die Summe der Gewichtsteile der Zusammensetzung auf 100 normiert ist.

In einer weiteren bevorzugten Ausführungsform bestehen die Zusammensetzungen nur aus den Komponenten A-F.

Die einzelnen oben genannten Vorzugsbereiche unterschiedlicher Komponenten sind frei miteinander kombinierbar, wobei besonders bevorzugt gleiche Rückzugsebenen miteinander kombiniert werden. In einer weiteren Ausführungsform ist die Zusammensetzung frei von kautschukmodifizierten Pfropfpolymerisaten.

In einer weiteren Ausführungsform ist die Zusammensetzung frei von Vinyl(Co)-polymerisaten, insbesondere SAN (Styrol-Acrylnitril) und Polyalkylenterephthalaten.

In einer weiteren Ausführungsform ist die Zusammensetzung frei von Vinyl(Co)-polymerisaten und kautschukmodifizierten Pfropfpolymerisaten.

Die bevorzugten Ausführungsformen der vorliegenden Erfindung können einzeln oder auch miteinanderverknüpft ausgeführt werden.

Nachfolgend werden bevorzugte Ausführungsformen 1 bis 28 der vorliegenden Erfindung beschrieben:

1. Zusammensetzungen dadurch gekennzeichnet, dass die Anteile der Komponenten

A) 40 bis 98 Gew.-Teile
B) 1 bis 60 Gew.-Teile
C) 1 bis 20 Gew.-Teile
D) 0 bis 20 Gew.-Teile
E) 0 bis 20 Gew.-Teile
F) 0 bis 30 Gew.-Teile

betragen und wobei die Summe der Gewichtsteile der Zusammensetzung auf 100 normiert ist.

2. Zusammensetzungen gemäß Ausführungsform 1, dadurch gekennzeichnet, dass die Anteile der Komponenten

A) 45 bis 90 Gew.-Teile,
B) 3 bis 50 Gew.-Teile
C) 2 bis 15 Gew.-Teile
D) 0 bis 15 Gew.-Teile
E) 0 bis 15 Gew.-Teile
F) 0,1 bis 15,0 Gew.-Teile

betragen und wobei die Summe der Gewichtsteile der Zusammensetzung auf 100 normiert ist.

3. Zusammensetzungen gemäß einer der vorherigen Ausführungsformen, dadurch gekennzeichnet, dass die Anteile der Komponenten

A) 50 bis 85 Gew.-Teile,
B) 5 bis 45 Gew.-Teile
C) 3 bis 12 Gew.-Teile
D) 0 bis 10 Gew.-Teile
E) 0 bis 10 Gew.-Teile
F) 0,2 bis 10 Gew.-Teile

betragen und wobei die Summe der Gewichtsteile der Zusammensetzung auf 100 normiert ist.

4. Zusammensetzungen gemäß einer der vorherigen Ausführungsformen, dadurch gekennzeichnet, dass der Polyester aus aliphatischen oder aromatischen Diolen und als Dicarbonsäure nur aus Bernsteinsäure abgeleitet ist.

5. Zusammensetzungen gemäß Ausführungsform 4, dadurch gekennzeichnet, dass die Diole aliphatisch sind.

6. Zusammensetzungen gemäß Ausführungsform 5, dadurch gekennzeichnet, dass das Diol Butandiol ist.

7. Zusammensetzungen gemäß einer der vorherigen Ausführungsformen, dadurch gekennzeichnet, dass k für eine ganze Zahl von 1 bis 8 steht.

8. Zusammensetzungen gemäß einer der vorherigen Ausführungsformen, dadurch gekennzeichnet, dass k für eine ganze Zahl von 1 bis 5 steht.

9. Zusammensetzungen gemäß einer der vorherigen Ausführungsformen, dadurch gekennzeichnet, dass der Anteil der Trimeren (k=1) 50 bis 98 mol.-% der Komponente C ist.

10. Zusammensetzungen gemäß einer der vorherigen Ausführungsformen, dadurch gekennzeichnet, dass der Anteil der Trimeren (k=1) 60 bis 95 mol.-% der Komponente C ist.

11. Zusammensetzungen gemäß einer der vorherigen Ausführungsformen, dadurch gekennzeichnet, dass der Anteil der Trimeren (k=1) 65 bis 90 mol.-% der Komponente C ist.

12. Zusammensetzungen gemäß einer der vorherigen Ausführungsformen, dadurch gekennzeichnet, dass der Anteil der Trimeren (k=1) 65 bis 85 mol.-% der Komponente C ist.

13. Zusammensetzungen gemäß einer der vorherigen Ausführungsformen, dadurch gekennzeichnet, dass der Anteil der Trimeren (k=1) 75 bis 85 mol.-% der Komponente C ist.

14. Zusammensetzungen gemäß einer der vorherigen Ausführungsformen, dadurch gekennzeichnet, dass die Komponente C ausgewählt ist aus der Gruppe, die Propoxyphosphazene, Phenoxyphosphazene, Methylphenoxyphosphazene, Aminophosphazene und Fluoralkylphosphazene umfasst.

15. Zusammensetzungen gemäß einer der vorherigen Ausführungsformen, dadurch gekennzeichnet, dass das

gewichtsgemittelte Molekulargewicht Mw der aromatischen Polycarbonate und Polyestercarbonate Bereich von 15.000 bis 35.000 g/mol liegt, bestimmt durch GPC (Gelpermeationschromatographie in Methylenchlorid mit Polycarbonat als Standard).

16. Zusammensetzungen gemäß einer der vorherigen Ausführungsformen, dadurch gekennzeichnet, dass das gewichtsgemittelte Molekulargewicht Mw der aromatischen Polycarbonate und Polyestercarbonate Bereich von 20.000 bis 33.000 g/mol liegt, bestimmt durch GPC (Gelpermeationschromatographie in Methylenchlorid mit Polycarbonat als Standard).

17. Zusammensetzungen gemäß einer der vorherigen Ausführungsformen, dadurch gekennzeichnet, dass das gewichtsgemittelte Molekulargewicht Mw der aromatischen Polycarbonate und Polyestercarbonate Bereich von 23.000 bis 30.000 g/mol liegt, bestimmt durch GPC (Gelpermeationschromatographie in Methylenchlorid mit Polycarbonat als Standard).

18. Zusammensetzungen gemäß einer der vorherigen Ausführungsformen, dadurch gekennzeichnet, dass der Polyester gemäß Komponente B Polybutylensuccinat ist.

19. Zusammensetzungen gemäß einer der vorherigen Ausführungsformen, dadurch gekennzeichnet, dass die gewichtsgemittelten Molekulargewichte Mw der Komponente B zwischen 15 und 750 kg/mol liegen, bestimmt durch Gel-Permeations-Chromatographie gegen Polystyrol als Referenz.

20. Zusammensetzungen gemäß einer der vorherigen Ausführungsformen, dadurch gekennzeichnet, dass die gewichtsgemittelten Molekulargewichte Mw der Komponente B zwischen 40 und 500 kg/mol liegen, bestimmt durch Gel-Permeations-Chromatographie gegen Polystyrol als Referenz.

21. Zusammensetzungen gemäß einer der vorherigen Ausführungsformen, dadurch gekennzeichnet, dass die gewichtsgemittelten Molekulargewichte Mw der Komponente B zwischen 80 und 400 kg/mol liegen, bestimmt durch Gel-Permeations-Chromatographie gegen Polystyrol als Referenz.

22. Zusammensetzungen gemäß einer der vorherigen Ausführungsformen, dadurch gekennzeichnet, dass die Komponente B eine Glasübergangstemperatur von -45°C bis 0°C hat.

23. Zusammensetzungen gemäß einer der vorherigen Ausführungsformen, dadurch gekennzeichnet, dass die Komponente B einen Schmelzpunkt von 90°C bis 125°C hat.

24. Zusammensetzungen gemäß einer der vorherigen Ausführungsformen, dadurch gekennzeichnet, dass die Komponente C ein Phenoxyphosphazen ist mit einem Trimerenanteil (k=1) von 65 bis 85 mol.-%, einem Tetramerenanteil (k=2) von 10 bis 20 mol.-%, einem Anteil an höheren oligomeren Phosphazene (k=3, 4, 5, 6 und 7) von 5 bis 20 mol.-% und Phosphazen-Oligomere mit k>= 8 von 0 bis 2 mol.-%, bezogen auf die Komponente C.

25. Zusammensetzungen nach einer der vorherigen Ausführungsformen, enthaltend als Komponente F mindestens einen Zusatzstoff ausgewählt aus der Gruppe, die Flammschutzsynergisten, Antidrippingmittel, Gleit- und Entformungsmittel, Nukleiermittel, Stabilisatoren, Antistatika, Farbstoffe, Pigmente und Füll- und Verstärkungsstoffe umfasst.

26. Zusammensetzungen gemäß einer der vorherigen Ausführungsformen, dadurch gekennzeichnet, dass die Säurekomponente des Polyesters aus nachwachsenden Rohstoffen stammt.

27. Verwendung von Zusammensetzungen gemäß einer der Ausführungsformen 1 bis 26 zur Herstellung von spritzgegossenen oder thermogeformten Formkörper.

28. Formkörper erhältlich aus Zusammensetzungen gemäße einer der Ausführungsformen 1 bis 26.

## Komponente A

Erfindungsgemäß geeignete aromatische Polycarbonate und Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1

495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Bevorzugte Herstellungsweisen der erfindungsgemäß zu verwendenden Polycarbonate, einschließlich der Polyestercarbonate sind das bekannte Grenzflächenverfahren und das bekannte Schmelzumesterungsverfahren (vgl. z. B. WO 2004/063249 A1, WO 2001/05866 A1, WO 2000/105867, US-A 5,340,905, US 5,097,002, US-A 5,717,057).

Die Herstellung aromatischer Polycarbonate und Polyestercarbonate erfolgt z. B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

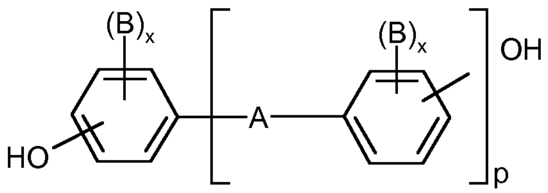

(I),

wobei

A eine Einfachbindung, $C_1$ bis $C_5$-Alkylen, $C_2$ bis $C_5$-Alkyliden, $C_5$ bis $C_6$-Cycloalkyliden, -O-, - SO-, -CO-, -S-, $-SO_2-$, $C_6$ bis $C_{12}$-Arylen, an das weitere aromatische gegebenenfalls Heteroatome enthaltende Ringe kondensiert sein können,
oder ein Rest der Formel (II) oder (III)

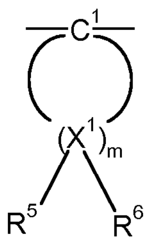

(II)

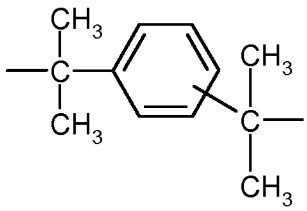

(III)

B jeweils $C_1$ bis $C_{12}$-Alkyl, vorzugsweise Methyl, Halogen, vorzugsweise Chlor und/oder Brom
x jeweils unabhängig voneinander 0, 1 oder 2,
p 1 oder 0 sind, und
$R^5$ und $R^6$ für jedes $X^1$ individuell wählbar, unabhängig voneinander Wasserstoff oder $C_1$ bis $C_6$-Alkyl, vorzugsweise Wasserstoff, Methyl oder Ethyl,
$X^1$ Kohlenstoff und
m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenole oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der

Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt bevorzugt im Bereich 1,18 bis 1,4, besonders bevorzugt im Bereich 1,20 bis 1,32 (gemessen an Lösungen von 0,5 g Polycarbonat oder Polyestercarbonat in 100 ml Methylenchlorid-Lösung bei 25°C). Das gewichtsgemittelte Molekulargewicht Mw der aromatischen Polycarbonate und Polyestercarbonate liegt bevorzugt im Bereich von 15.000 bis 35.000 g/mol, weiter bevorzugt im Bereich von 20.000 bis 33.000 g/mol, besonders bevorzugt 23.000 bis 30.000 g/mol, bestimmt durch GPC (Gelpermeationschromatographie in Methylenchlorid mit Polycarbonat als Standard).

Komponente **B**

Als Komponente B) enthalten die Zusammensetzungen erfindungsgemäß einen Polyester oder eine Mischung aus zwei oder mehr unterschiedlichen Polyestern.

Polyester im Sinne der Erfindung sind Reaktionsprodukte aus Bernsteinsäure oder ihren reaktionsfähigen Derivaten und aliphatischen, cycloaliphatischen oder araliphatischen Diolen und Mischungen dieser Reaktionsprodukte.

Bevorzugte Polyester lassen sich aus Bernsteinsäure (oder ihren reaktionsfähigen Derivaten) oder aus Mischungen aus Bernsteinsäure und bis zu 20 Mol.% Reste anderer aromatischer Dicarbonsäuren mit 8 bis 14 C-Atomen oder aliphatischer Dicarbonsäuren mit 4 bis 12 C-Atomen wie Reste von Phthalsäure, Isophthalsäure, Naphthalin-2,6-dicarbonsäure, 4,4'-Diphenyldicarbonsäure, Adipin-, Sebacinsäure, Azelainsäure, Cyclohexandiessigsäure, Cyclohexandicarbonsäure und aliphatischen Diolen mit 2 bis 10 C-Atomen, beispielsweise Ethandiol, Propylenglycol, Butandiol oder Pentandiol nach bekannten Methoden wie Kondensationspolymerisation von Dicarbonsäureverbindungen oder funktionalen Derivaten wie Anhydriden und Chloriden einerseits und Diolen andererseits herstellen. Die Kondensationspolymerisation kann in Lösung, Schmelze oder fester Phase, oder in einer Kombination von Reaktionsschritten in verschiedenen Phasen durchgeführt werden.

In einer weiteren Ausführungsform ist das Polyesterpolymer ein aliphatisches Polyalkylensuccinat. In noch einer weiteren Ausführungsform ist das Polyesterpolymer ausgewählt aus der Gruppe bestehend aus Polyethylensuccinat, Polyethylensuccinat-co-adipat, Polyethylensuccinat-co-terephthalat, Polybutylensuccinat, Polybutylensuccinat-co-adipat und Polybutylensuccinat-co-terephthalat.

Besonders bevorzugt sind Bernsteinsäureester, die allein aus Bernsteinsäure oder ihren reaktionsfähigen Derivaten (z.B. Dimethylestern oder Anhydriden) und einem Diol hergestellt werden.

In einer bevorzugten Ausführungsform sind Diole der vorliegenden Erfindung aliphatische Diole. In einer weiter bevorzugten Ausführungsform sind die Diole Alkandiole mit 2 bis 10 C Atomen. Besonders bevorzugt sind Diole ausgewählt aus der Gruppe, die Ethandiol, Propandiol, Butandiol und Pentandiol umfasst, wobei Butandiol am meisten bevorzugt ist. In der am meisten bevorzugten Ausführungsform wird ein Polyester aus Bernsteinsäure und Butandiol verwendet.

In einer bevorzugten Ausführungsform werden zur Erhöhung des Molekulargewichts Kopplungsmittel eingesetzt. Beispiele für solche Kopplungsmittel sind 2,4-toluylen-diisocyanat, eine Mischung von 2,4-toluylen-diisocyanat und 2,6-toluylen-diisocyanat, diphenylmethan-diisocyanat, 1,5-naphthylendiisocyanat, xylylen- diisocyanat, hydriertes xylylen-diisocyanat, hexamethylen-diisocyanat und isophoron-diisocyanat. Bevorzugt werden hexamethylen-diisocyanat und isophoron-diisocyanat benutzt

Die Herstellung der erfindungsgemäßen Polyester ist beispielsweise in EP 0707047 A2 beschrieben.

Die Bernsteinsäureester können durch Einbau relativ kleiner Mengen 3- oder 4-wertiger Alkohole oder 3- oder 4-wertiger Carbonsäure, wie sie z.B. in der DE 1900270 A1 und der US 3 692 744 (A) beschrieben sind, verzweigt werden. Beispiele für bevorzugte Verzweigungsmittel sind Trimesinsäure, Trimellitsäure, Trimethylolethan, Trimethylolpropan und Pentaerythrit. Besonders bevorzugt als Verzeigungsmittel ist Trimethylolpropan, am meisten bevorzugt 1,1,1-Trimethylolpropan. Es ist ratsam, nicht mehr als 1 Gew.-% des Verzweigungsmittels, bezogen auf den Polyester, zu verwenden

Die vorzugsweise verwendeten Bernsteinsäureester besitzen gewichtsgemittelten Molekulargewichte Mw von 10 bis 1500 kg/mol (bestimmt durch Gel-Permeations-Chromatographie gegen Polystyrol als Referenz, Lösungsmittel Dichlormethan, Konzentration 6 g/l), bevorzugt 15 bis 750 kg/mol, noch weiter bevorzugt 40 bis 500 kg/mol und besonders bevorzugt 80 bis 400 kg/mol.

Als Säurekomponente eingesetzte Bernsteinsäure kann aus biologischen Quellen stammen, d.h. aus nachwachsenden Rohstoffen gewonnen sein, z.B. durch Fermentation von Glucose oder aus Hydrolysaten von Biomasse.

In einer besonders bevorzugten Ausführungsform ist der Polyester ein Polybutylensuccinat, das ein gewichtsgemittelten Molekulargewicht von 80 bis 400 kg/mol ((bestimmt durch Gel-Permeatations-Chromatographie gegen Polystyrol als Referenz) besitzt.

Bei der Herstellung wird initial üblicherweise der entsprechende Dicarbonsäurediester in einer Veresterungs- oder Umesterungsreaktion bei Temperaturen von ca. 150°C bis 300°C gebildet, der dann bei steigender Temperatur

und verminderten Druck polykondensiert wird, wobei die entsprechenden Hydroxyverbindungen und/oder Wasser abgespalten werden. Die letzten Stufen der Reaktion werden allgemein im Hochvakuum (<10mm Quecksilbersäule) durchgeführt, um ein Polyesterpolymer mit hohem Molekulargewicht darzustellen.

Beide Reaktionsschritte können optional unter Verwendung von Veresterungskatalysatoren und/oder Umesterungskatalysatoren und/oder Polykondensationskatalysatoren durchgeführt werden. Gebräuchliche Katalysatoren umfassen Ti-, Zr-, Sn-, und Sb-Verbindungen für die Veresterung, Mn-, Co- und Zn-Verbindungen für die Umesterung, und Sb-, Ti-, Pb-, Ge-, Zn- und Sn-Verbindungen für die Polykondensation, wobei die Verbindungen im allgemeinen ausgewählt sind aus der Gruppe, die Oxide, Alkoholate, Acetate und Carboxylate umfasst. Der Metallgehalt im Katalysator beträgt üblicherweise zwischen 20 und 500 ppm, bezogen auf 100 Gewichtsteile Polyesterpolymer.

Vorzugsweise hat die Komponente B eine Glasübergangstemperatur -50°C bis 90°C, besonders bevorzugt -45°C bis 0°C. Die Komponente B besitzt vorzugsweise einen Schmelzpunkt von 80°C bis 260°C, weiter bevorzugt von 85°C bis 180°C und noch weiter bevorzugt von 90°C bis 125°C.

Die Bestimmung der Glasübergangstemperatur erfolgt nach DIN 53765 bei einer Heizrate von 20 K mit Stickstoffschutzgas, wobei die Glasübergangstemperatur als Schnittpunkt der Mittellinie zwischen den extrapolierten Basislinien vor und nach dem Glasübergang der Messkurve bestimmt wird.

**Komponente C**

Phosphazene gemäß Komponente C, welche gemäß der vorliegenden Erfindung eingesetzt werden, sind cyclische Phosphazene gemäß Formel (IV)

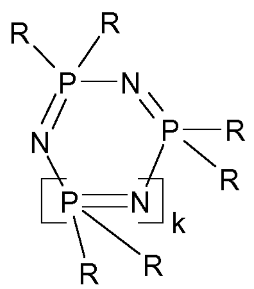

(IV),

wobei

R jeweils gleich oder verschieden ist und für

- -einen Aminrest,
- -jeweils, gegebenenfalls halogeniertes, vorzugsweise mit Fluor halogeniertes, weiter bevorzugt monohalogeniertes, $C_1$- bis $C_8$-Alkyl, vorzugsweise Methyl, Ethyl, Propyl oder Butyl,
- -$C_1$- bis $C_8$- Alkoxy, vorzugsweise Methoxy, Ethoxy, Propoxy oder Butoxy,
- -jeweils gegebenenfalls durch Alkyl, vorzugsweise $C_1$-$C_4$-Alkyl, und/oder Halogen, vorzugsweise Chlor und/oder Brom, substituiertes $C_5$- bis $C_6$-Cycloalkyl,
- -jeweils gegebenenfalls durch Alkyl, vorzugsweise $C_1$-$C_4$-Alkyl, und/oder Halogen, vorzugsweise Chlor, Brom und/oder Hydroxy-substituiertes, $C_6$- bis $C_{20}$-Aryloxy, vorzugsweise Phenoxy, Naphthyloxy,
- -jeweils gegebenenfalls durch Alkyl, vorzugsweise $C_1$-$C_4$-Alkyl, und/oder Halogen, vorzugsweise Chlor und/oder Brom, substituiertes $C_7$- bis $C_{12}$-Aralkyl, vorzugsweise Phenyl-$C_1$-$C_4$-alkyl, oder
- -einen Halogen-Rest, vorzugsweise Chlor oder Fluor, oder
- -einen OH-Rest steht,

k für eine ganze Zahl von 1 bis 10, vorzugsweise für eine Zahl von 1 bis 8, besonders bevorzugt 1 bis 5, steht.

Bevorzugt sind neben dem Trimeren (k=1) weitere höhere Oligomere mit k=2 bis 10 enthalten.

Weiter Bevorzugt werden als Komponente C Phosphazene mit einem Trimerenanteil (k=1) von 50 bis 98 mol.-%" weiter bevorzugt von 60 bis 95 mol.-%, besonders bevorzugt von 65 bis 90 mol.-%, und ganz besonders bevorzugt von 65 - 85 mol.-%, insbesondere 70 - 85 mol.-%, bezogen auf die Komponente C eingesetzt

Bevorzugt sind:

Propoxyphosphazen, Phenoxyphosphazen, Methylphenoxyphosphazen, Aminophosphazen und Fluoralkylphosphazene, sowie Phosphazene der folgenden Strukturen:

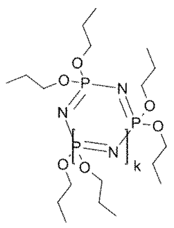

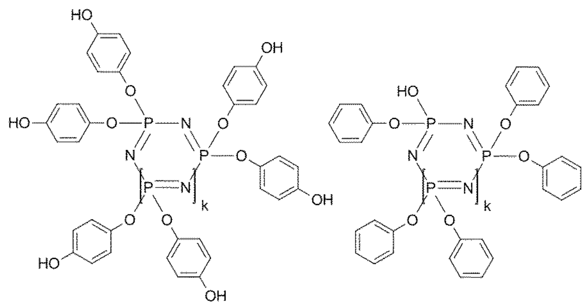

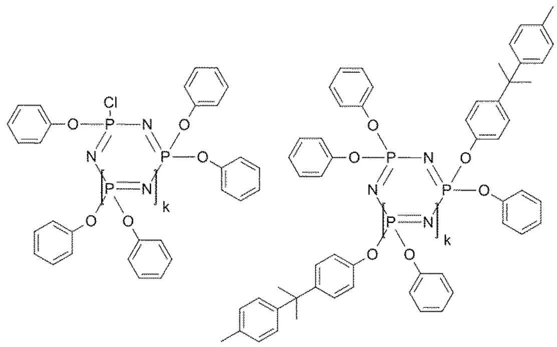

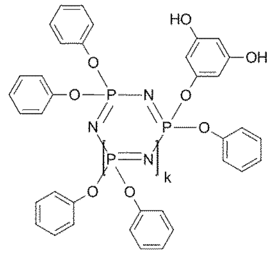

In den oben gezeigten Verbindungen ist k = 1, 2 oder 3.

Bevorzugt ist Phenoxyphosphazen (alle R = Phenoxy) mit einem Anteil an Oligomeren mit k = 1 (C1) von 50 bis 98 mol.-%, weiter bevorzugt 60 bis 98 mol.-%.

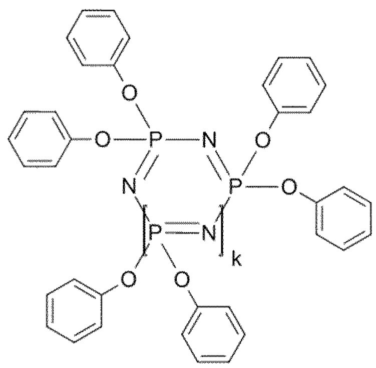

(V)

Für den Fall, dass das Phosphazen gemäß Formel (IV) am Phosphor Halogen-substitiert ist, z. B. aus unvollständig reagierten Ausgangsmaterial, ist der Anteil dieses am Phosphor Halogen-substituierten Phosphazens bevorzugt kleiner als 1000 ppm, weiter bevorzugt kleiner 500ppm.

Die Phosphazene können allein oder als Mischung eingesetzt werden, d.h. der Rest R kann gleich sein oder 2 oder mehr Reste in der Formel (IV) können verschieden sein. Bevorzugt sind die Reste R eines Phosphazens identisch.

In einer weiter bevorzugten Ausführungsform werden nur Phosphazene mit gleichem R eingesetzt.

In einer bevorzugten Ausführungsform beträgt der Anteil der Tetrameren (k=2) (C2) von 2 bis 50 mol.-% bezogen

auf die Komponente C, weiter bevorzugt von 5 bis 40 mol.%, noch weiter bevorzugt von 10 bis 30 mol.-%, besonders bevorzugt von 10 bis 20 mol.-%.

In einer bevorzugten Ausführungsform beträgt der Anteil der höheren oligomeren Phosphazene (k=3, 4, 5, 6 und 7) (C3) von 0 bis 30 mol.-% bezogen auf die Komponente C, weiter bevorzugt von 2,5 bis 25 mol.%, noch weiter bevorzugt von 5 bis 20 mol.-%, und besonders bevorzugt von 6 - 15 mol.-%.

In einer bevorzugten Ausführungsform beträgt der Anteil der Oligomere mit k>= 8 (C4) von 0 bis 2,0 mol.-% bezogen auf die Komponente C, und bevorzugt von 0,10 bis 1,00 mol.-%.

In einer weiter bevorzugten Ausführungsform erfüllen die Phosphazene der Komponente C alle drei zuvor genannten Bedingungen hinsichtlich der Anteile (C2 - C4).

Bevorzugt ist die Komponente C ein Phenoxyphosphazen mit einem Trimerenanteil (k=1) von 65 bis 85 mol.-%, einem Tetramerenanteil (k=2) von 10 bis 20 mol.-%, einem Anteil an höheren oligomeren Phosphazene (k=3, 4, 5, 6 und 7) von 5 bis 20 mol.-% und Phosphazen-Oligomere mit k>= 8 von 0 bis 2 mol.-%, bezogen auf die Komponente C.

Mit n wird der gewichtete arithmetische Mittelwert von k gemäß folgender Formel definiert:

$$n = \frac{\sum_{i=1}^{max} \mathrm{k_i} \cdot \mathrm{x_i}}{\sum_{i=1}^{max} \mathrm{x_i}}$$

Dabei ist $x_i$ der Anteil des Oligomers $k_i$ und es gilt also, dass die Summe aller $x_i$ gleich 1 ist.

In einer alternativen Ausführungsform ist n im Bereich von 1,10 bis 1,75, bevorzugt von 1,15 bis 1,50, weiter bevorzugt von 1,20 bis 1,45, und besonders bevorzugt von 1,20 bis 1,40 (Bereichsgrenzen eingeschlossen).

Die Phosphazene und deren Herstellung sind beispielsweise in EP-A 728 811, DE-A 1 961668 und WO 97/40092 beschrieben.

Die Oligomer-Zusammensetzungen der Phosphazene in den jeweiligen Blendproben lassen sich auch nach Compoundieren mittels $^{31}$P NMR nachweisen und quantifizieren (chemische Verschiebung; δ trimer: 6,5 bis 10,0 ppm; δ tetramer: -10 bis -13,5 ppm; δ höhere Oligomere: -16,5 bis -25,0 ppm).

## Komponente D

Die Komponente D umfasst ein oder mehrere Pfropfpolymerisate von

D.1 5 bis 95, vorzugsweise 30 bis 90 Gew.-%, wenigstens eines Vinylmonomeren auf

D.2 95 bis 5, vorzugsweise 70 bis 10 Gew.-% wenigstens einer Pfropfgrundlage ausgewählt aus der Gruppe bestehend aus Dienkautschuke, EP(D)M-Kautschuke (d.h. solche auf Basis Ethylen/Propylen und gegebenenfalls Dien), Acrylat-, Polyurethan-, Silikon-, Silikonacrylat-, Chloropren und Ethylen/Vinylcetat-Kautschuke, sowie Polybutadien-Styrol-Kautschuk.

Die Pfropfgrundlage D.2 hat im Allgemeinen eine mittlere Teilchengröße ($d_{50}$-Wert) von 0,05 bis 10 μm, vorzugsweise 0,1 bis 5 μm, besonders bevorzugt 0,2 bis 1 μm.

Monomere D.1 sind vorzugsweise Gemische aus

D.1.1 50 bis 99 Gew.-Teilen Vinylaromaten und/oder kernsubstituierten Vinylaromaten (wie Styrol, α-Methylstyrol, p-Methylstyrol, p-Chlorstyrol) und/oder (Meth)Acrylsäure-($C_1$-$C_8$)-Alkylester, wie Methyl(meth)acrylat, Ethyl(meth)acrylat, und

D.1.2 1 bis 50 Gew.-Teilen Vinylcyanide (ungesättigte Nitrile wie Acrylnitril und Methacrylnitril) und/oder (Meth)Acrylsäure-($C_1$-$C_8$)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugte Monomere D.1.1 sind ausgewählt aus mindestens einem der Monomere Styrol, α-Methylstyrol und Methylmethacrylat, bevorzugte Monomere D.1.2 sind ausgewählt aus mindestens einem der Monomere Acrylnitril, Maleinsäureanhydrid und Methylmethacrylat.

Die Kennzeichnung des Bestandteils "(Meth)" in Klammern bei Acrylaten bedeutet das optionale Vorhandensein dieses Bestandteils.

Bevorzugte Pfropfgrundlagen D.2 sind Silikonacrylatkautschuke, Dienkautschuke (beispielsweise auf Basis Butadien und Isopren) oder Gemische von Dienkautschuken. Unter Dienkautschuk im erfindungsgemäßen Sinne sind auch Copolymerisate von Dienkautschuken oder deren Gemischen mit weiteren copolymerisierbaren Monomeren (z.B. gemäß D.1.1 und D.1.2) zu verstehen.

Die Pfropfgrundlagen D.2 weisen im Allgemeinen eine Glasübergangstemperatur von < 10°C, vorzugsweise < 0°C, besonders bevorzugt < -10°C auf.

In einer Ausführungsform ist das Monomer D.1 Polymethylmethacrylat (PMMA), wobei weiter bevorzugt die Pfropfgrundlage D.2 ein Silikonacrylatkautschuk ist.

Besonders bevorzugte Polymerisate D sind beispielsweise ABS-Polymerisate (Emulsions-, Masse- und Suspensions-ABS), wie sie z.B. in der DE-OS 2 035 390 (=US-PS 3 644 574) oder in der DE-OS 2 248 242 (=GB-PS 1 409 275) bzw. in Ullmanns, Enzyklopädie der Technischen Chemie, Bd. 19 (1980), S. 280 ff. beschrieben sind.

Der Gelanteil der Pfropfgrundlage D.2 beträgt bevorzugt mindestens 20 Gew.-%, im Falle von im Emulsionspolymerisation hergestellten Pfropfgrundlagen D.2 vorzugsweise mindestens 40 Gew.-% (in Toluol gemessen).

Vorzugsweise weist das Pfropfpolymerisat aus den Komponenten D.1 und D.2 eine Kern-Schale-Struktur auf, wobei die Komponente D.1 die Schale bildet (auch als Hülle bezeichnet) und die Komponente D.2 den Kern ausbildet (siehe bspw. Ullmann's Encyclopedia of Industrial Chemistry, VCH-Verlag, Vol. A21, 1992, Seite 635 und Seite 656.

Die Pfropfcopolymerisate D werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die im Emulsionspolymerisationsverfahren durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten D auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß D.2 der Polymerisate D sind vorzugsweise Polymerisate aus Acrylsäurealkylestern, gegebenenfalls mit bis zu 40 Gew.-%, bezogen auf D.2 anderen polymerisierbaren, ethylenisch ungesättigten Monomeren. Zu den bevorzugten polymerisierbaren Acrylsäureestern gehören $C_1$ bis $C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Allylmethacrylat; mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat. Bevorzugte vernetzende Monomere sind Allylmethacrylat, Ethylenglykoldimethacrylat, Diallylphthalat und heterocyclische Verbindungen, die mindestens drei ethylenisch ungesättigte Gruppen aufweisen. Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage D.2. Bei cyclischen vernetzenden Monomeren mit mindestens drei ethylenisch ungesättigten Gruppen ist es vorteilhaft, die Menge auf unter 1 Gew.-% der Pfropfgrundlage D.2 zu beschränken.

Bevorzugte "andere" polymerisierbare, ethylenisch ungesättigte Monomere, die neben den Acrylsäureestern gegebenenfalls zur Herstellung der Pfropfgrundlage D.2 dienen können, sind z.B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage D.2 sind Emulsionspolymerisate, die einen Gelgehalt von mindestens 60 Gew.-% aufweisen.

Geeignete Silikonkautschuke gemäß D.2. können durch Emulsionspolymerisation hergestellt werden, wie beispielsweise in US 2891920 und US 3294725 beschrieben. Weitere geeignete Pfropfgrundlagen gemäß D.2 sind Silikonkautschuke mit pfropfaktiven Stellen, wie sie in den DE-OS 3 704 657, DE-OS 3 704 655, DE-OS 3 631 540 und DE-OS 3 631 539 beschrieben werden.

Als Pfropfgrundlagen D.2 sind erfindungsgemäß auch Silikonacrylat-Kautschuke geeignet. Diese Silikonacrylat-Kautschuke sind Komposit-Kautschuke mit pfropfaktiven Stellen enthaltend 10 - 90 Gew.-% Silikonkautschuk-Anteil und 90 bis 10 Gew.-% Polyalkyl(meth)acrylatkautschuk-Anteil, wobei sich die beiden genannten Kautschuk-Komponenten im Komposit-Kautschuk gegenseitig durchdringen, so dass sie sich nicht wesentlich voneinander trennen lassen. Wenn im Komposit-Kautschuk der Anteil der Silikonkautschuk-Komponente zu hoch ist, haben die fertigen Harzzusammensetzungen nachteilige Oberflächeneigenschaften und eine verschlechterte Einfärbbarkeit. Wenn dagegen der Anteil der Polyalkyl(meth)acrylatkautschuk-Komponente im Komposit-Kautschuk zu hoch ist, wird die Schlagzähigkeit der fertigen Harzzusammensetzung nachteilig beeinflusst).Silikonacrylat-Kautschuke sind bekannt und beispielsweise beschrieben in US 5,807,914, EP 430134 und US 4888388. Vorzugsweise eingesetzt wird ein in Emulsionspolymerisation hergestelltes Pfropfpolymer mit D.1 Methylmetacrylat und D.2 Silikonacrylat-Komposit-Kautschuk.

Der Gelgehalt der Pfropfgrundlage D.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße dso ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

## Komponente E

Die Komponente E umfasst ein oder mehrere thermoplastische Vinyl(Co)Polymerisate und/oder Polyalkylenterephthalate.

Geeignet sind als Vinyl(Co)Polymerisate E Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren.

Insbesondere geeignet sind (Co)Polymerisate aus

E.1 50 bis 99, vorzugsweise 60 bis 80 Gew.-Teilen Vinylaromaten und/oder kernsubstituierten Vinylaromaten wie Styrol, $\alpha$-Methylstyrol, p-Methylstyrol, p-Chlorstyrol) und/oder (Meth)Acrylsäure-($C_1$-$C_8$)-Alkylester, wie Methylmethacrylat, Ethylmethacrylat), und

E.2 1 bis 50, vorzugsweise 20 bis 40 Gew.-Teilen Vinylcyanide (ungesättigte Nitrile) wie Acrylnitril und Methacrylnitril und/oder (Meth)Acryl-säure-($C_1$-$C_8$)-Alkylester, wie Methylmethacrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate E sind harzartig, thermoplastisch und kautschukfrei. Besonders bevorzugt ist das Copolymerisat aus E.1 Styrol und E.2 Acrylnitril.

Die (Co)Polymerisate gemäß E sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000 g/mol.

Geeignet als Komponente E enthalten die Zusammensetzungen erfindungsgemäß ein oder eine Mischung aus zwei oder mehr unterschiedlichen Polyalkylenterephthalaten.

Polyalkylenterephthalate im Sinne der Erfindung sind Polyalkylenterephthalate, die sich von Terephthalsäure (oder ihren reaktionsfähigen Derivaten, z.B. Dimethylestern oder Anhydriden) und Alkandiolen, cycloaliphatischen oder araliphatischen Diolen und Mischungen daraus, beispielsweise auf Basis von Propylenglycol, Butandiol, Pentandiol, Hexandiol, 1,2-Cyclohexandiol, 1,4-Cyclohexandiol, 1,3-Cyclohexandiol, und Cyclohexyldimethanol, ableiten, wobei die erfindungsgemäße Diolkomponente mehr als 2 Kohlenstoffatome aufweist. Demgemäß werden als Komponente E bevorzugt Polybutylenterephthalat und/oder Polytrimethylenterephthalat, am meisten bevorzugt Polybutylenterephthalat eingesetzt.

Die erfindungsgemäßen Polyalkylenterephthalate können als Monomer der Disäure auch bis zu 5 Gew.-% Isophthalsäure enthalten.

Bevorzugte Polyalkylenterephthalate lassen sich aus Terephthalsäure (oder ihren reaktionsfähigen Derivaten) und aliphatischen oder cycloaliphatischen Diolen mit 3 bis 21 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise mindestens 90 Mol.-%, bezogen auf die Diolkomponente, Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die bevorzugten Polyalkylenterephthalate können neben Propandiol-1,3- bzw. Butandiol-1,4-resten bis zu 20 Mol.-% anderer aliphatischer Diole mit 3 bis 12 C-Atomen oder cycloaliphatischer Diole mit 6 bis 21 C-Atomen enthalten, z.B. Reste von 1,3-Propandiol, 2-Ethylpropan-1,3-diol, Neopentylglykol, 1,5-Pentan-diol, 1,6-Hexandiol, Cyclohexan-1,4-dimethanol, 3-Methylpentan-2,4-diol, 2-Methylpentan-2,4-diol, 2,2,4-Trimethylpentan-1,3-diol und 2-Ethylhexan-1,6-diol, 2,2-Diethylpropan-1,3-diol, 2,5-Hexandiol, 1,4-Di-(ß-hydroxyethoxy)-benzol, 2,2-Bis-(4-hydroxycyclohexyl)-propan, 2,4-Dihydroxy-1, 1,3,3-tetramethyl-cyclobutan, 2,2-bis-(3-ß-hydroxyethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.-% des Verzweigungsmittels, bezogen auf die Säurekomponente, zu verwenden.

Besonders bevorzugt sind Polyalkylenterephthalate, die allein aus Terephthalsäure oder deren reaktionsfähigen Derivaten (z.B. deren Dialkylestern wie Dimethylterephthalat) und Propandiol-1,3 und/oder Butandiol-1,4 hergestellt worden sind (Polypropylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(propylenglykol-1,3/butandiol-1,4)-terephthalate.

Die Polyalkylenterephthalate besitzen im Allgemeinen eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

In einer alternativen Ausführungsform können die erfindungsgemäß hergestellten Polyester auch im Gemisch mit anderen Polyestern und/oder weiteren Polymeren eingesetzt werden, wobei hier bevorzugt Gemische von Polyalkylenterephthalaten mit anderen Polyestern eingesetzt werden.

## Komponente F

Die Zusammensetzung kann weitere handelsübliche Zusatzstoffe gemäß Komponente F wie Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, AlkylSulfonate oder Polyamid-haltige Polymere), Füll- und Verstärkungsstoffe (beispielsweise Glas- oder Karbonfasern, Glimmer, Kaolin, Talk, $CaCO_3$ und Glasschuppen) sowie Farbstoffe und Pigmente enthalten.

Besonders bevorzugt werden als Zusatzstoffe Entformungsmittel, Stabilisatoren, sowie Farbstoffe und Pigmente eingesetzt, wobei Kohlenstoffasern und Carbonanotubes keine Farbstoffe und Pigmente im Sinne der vorliegenden Erfindung darstellen und vorzugsweise nicht in den Zusammensetzungen enthalten sind.

## Herstellung und Prüfung der Formmassen

Die erfindungsgemäßen thermoplastischen Formmassen werden hergestellt, indem man die jeweiligen Bestandteile in bekannter Weise vermischt und bei Temperaturen von im Allgemeinen 240°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung sind ebenfalls Verfahren zur Herstellung der Formmassen und die Verwendung der Formmassen zur Herstellung von Formkörpern sowie die Formteile selbst.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Fernsehgeräte, Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karosserie- bzw. Innenbauteile für Nutzfahrzeuge, insbesondere für den Automobilbereich.

Außerdem können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen und für Fernsehgeräte, wärmeisolierte Transportbehältnisse, Formteile für Sanitär- und Badausrüstungen, Abdeckgitter für Lüfteröffnungen und Gehäuse für Gartengeräte.

Die folgenden Beispiele dienen der weiteren Erläuterung der Erfindung.

## Herstellung und Prüfung der Formmassen

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 20 kg/h bei einer Maschinentemperatur von 260°C compoundiert und granuliert.

Die fertigen Granulate werden auf einer Spritzgussmaschine zu den entsprechenden Probekörpern verarbeitet

(Massetemperatur 240°C, Werkzeugtemperatur 80°C, Fließfrontgeschwindigkeit 240 mm/s).

Die Reißdehnung wurde nach DIN EN ISO 527 an Stäben der Abmessung 170,0 x 10,0 x 4,0 mm gemessen. Das Spannungsrissverhalten (ESC-Verhalten) wurde an Stäben der Abmessung 80 x 10 x 4 mm, Verarbeitungstemperatur 260°C, untersucht. Als Testmedium wurde Rapsöl verwendet. Die Probekörper wurden mittels einer Kreisbogenschablone vorgedehnt (Vordehnung in Prozent) und bei Raumtemperatur im Testmedium gelagert. Das Spannungsrissverhalten wurde als Zeit bis zur Rissbildung bzw. den Bruch im Testmedium ausgewertet.

**Komponente A-1**

Lineares Polycarbonat auf Basis Bisphenol A mit einer relativen Lösungsviskosität von $\eta_{rel}$ = 1,28, gemessen in $CH_2Cl_2$ als Lösungsmittel bei 25°C und einer Konzentration von 0,5 g/100 ml.

**Komponente A-2**

Lineares Polycarbonat auf Basis Bisphenol A mit einer relativen Lösungsviskosität von $\eta_{rel}$ = 1,19, gemessen in $CH_2Cl_2$ als Lösungsmittel bei 25°C und einer Konzentration von 0,5 g/100 ml.

**Komponente B**

Linearer Polyester aus 48 Gew.-% Bernsteinsäure, 51 Gew.-% 1,4-Butandiol und 1,0 Gew.-% Hexamethylenediisocyanat mit einem gewichtsgemittelten Molekulargewicht Mw von 255 kg/mol (bestimmt durch GPC gegen Polystyrol Referenz, Lösungsmittel Dichlormethan, Konzentration 6 g/l).

**Komponente C-1**

Phenoxyphosphazen der Formel (a) mit 70 Gew.-% k = 1 und 30 Gew. -% k = 2 - 10.

(a) 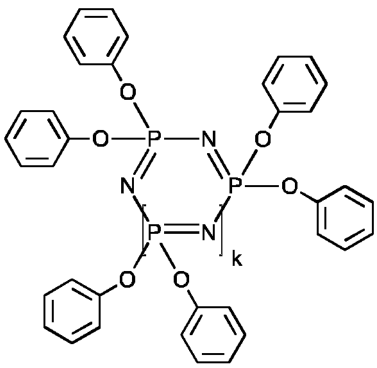 .

**Komponente C-2 (Vergleich)**

Bisphenol-A basierendes Oligophosphat mit 8,9% Phosphorgehalt.

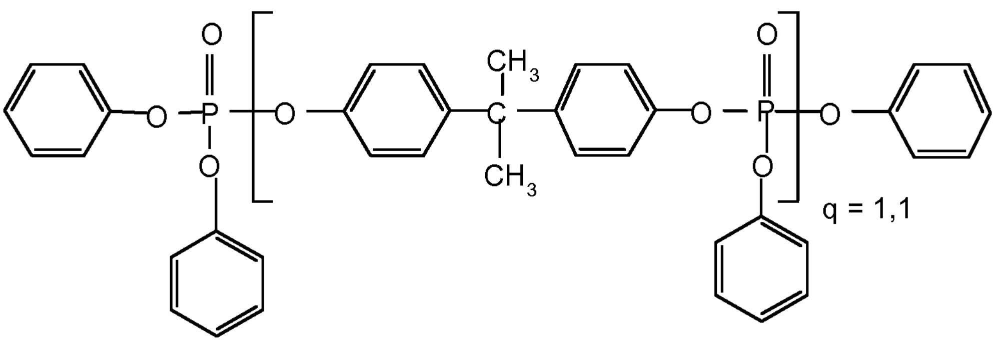

q = 1,1

**Komponente F-1**

CFP 6000 N, Polytetrafluorethylen-Pulver (Hersteller: Du Pont, Genf, Schweiz)

**Komponente F-2**

Pentaerythrittetrastearat als Gleit-/Entformungsmittel

**Komponente F-3**

Phosphitstabilisator, Irganox® B 900, Fa. Ciba Speciality Chemicals

Aus Tabelle 1 ist ersichtlich, dass die Zusammensetzungen der Beispiele 1 bis 3 mit Phosphazen als Flammschutzmittel die erfindungsgemäße Aufgabe lösen, d.h. eine Kombination aus hoher Reidehnung und guter Chemikalienbeständigkeit aufweisen.

**Tabelle 1**: Zusammensetzung und Eigenschaften der Formmassen

| **Komponenten (Gew.-Teile)** | Bsp. 1 | Bsp. 2 | Bsp. 3 | Bsp. 4 | Vgl. 1 | Vgl. 2 | Vgl. 3 | Vgl. 4 |
|---|---|---|---|---|---|---|---|---|
| A-1 | 52,1 | 46,1 | 40,1 | 34,1 | 52,1 | 46,1 | 40,0 | 34,1 |
| A-2 | 30,0 | 26,0 | 22,0 | 18,0 | 30,0 | 26,0 | 22,0 | 18,0 |
| B | 10,0 | 20,0 | 30,0 | 40,0 | 10,0 | 20,0 | 30,0 | 40,0 |
| C-1 | 7,0 | 7,0 | 7,0 | 7,0 | | | | |
| C-2 | | | | | 7,0 | 7,0 | 7,0 | 7,0 |
| F-1 | 0,4 | 0,4 | 0,4 | 0,4 | 0,4 | 0,4 | 0,4 | 0,4 |
| F-2 | 0,4 | 0,4 | 0,4 | 0,4 | 0,4 | 0,4 | 0,4 | 0,4 |
| F-3 | 0,1 | 0,1 | 0,1 | 0,1 | 0,1 | 0,1 | 0,1 | 0,1 |
| **Eigenschaften** | | | | | | | | |
| Reißdehnung | 121 | 124 | 115 | 112 | 92 | 59 | 76 | 79 |
| ESC-Test (Rapsöl), 2,4%, Zeit zum Bruch [min] | 82 | 58 | 90 | 1200 | 50 | 50 | 30 | 140 |

## Patentansprüche

1. Zusammensetzungen enthaltend

   A) mindestens ein Polymer ausgewählt aus der Gruppe bestehend aus aromatisches Polycarbonat und aromatisches Polyestercarbonat,
   B) mindestens ein Polyester, wobei der Polyester aus Bernsteinsäure und optional weiteren Dicarbonsäuren sowie aliphatischen, cycloaliphatischen, araliphatischen oder aromatischen Diolen abgeleitet ist,
   C) mindestens ein cyclisches Phosphazen der Struktur (IV)

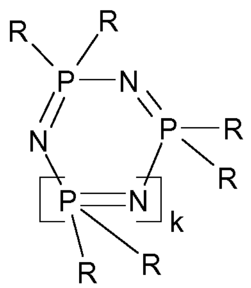

(IV),

   wobei

   R jeweils gleich oder verschieden ist und für

- einen Aminrest,
- jeweils gegebenenfalls halogeniertes $C_1$- bis $C_8$-Alkyl,
- $C_1$- bis $C_8$- Alkoxy
- jeweils gegebenenfalls durch Alkyl und/oder Halogen substituiertes $C_5$- bis $C_6$-Cycloalkyl,
- jeweils gegebenenfalls durch Alkyl und/oder Halogen und/oder Hydroxysubstituiertes, $C_6$- bis $C_{20}$-Aryloxy
- jeweils gegebenenfalls durch Alkyl und/oder Halogen und/oder Brom, substituiertes $C_7$- bis $C_{12}$-Aralkyl
- einen Halogen-Rest oder
- einen OH-Rest steht,

k für eine ganze Zahl von 1 bis 10 steht,

D) optional Pfropfpolymerisat,
E) optional Vinyl(Co)Polymerisat und/oder Polyalkylenterephthalat,
F) optional Zusatzstoffe.

**2.** Zusammensetzungen gemäß Anspruch 1 **dadurch gekennzeichnet, dass** die Anteile der Komponenten

A) 40 bis 98 Gew.-Teile
B) 1 bis 60 Gew.-Teile
C) 1 bis 20 Gew.-Teile
D) 0 bis 20 Gew.-Teile
E) 0 bis 20 Gew.-Teile
F) 0 bis 30 Gew.-Teile
betragen und wobei die Summe der Gewichtsteile der Zusammensetzung auf 100 normiert ist.

**3.** Zusammensetzungen gemäß einem der vorherigen Ansprüche, **dadurch gekennzeichnet, dass** die Anteile der Komponenten

A) 50 bis 85 Gew.-Teile,
B) 5 bis 45 Gew.-Teile
C) 3 bis 12 Gew.-Teile
D) 0 bis 10 Gew.-Teile
E) 0 bis 10 Gew.-Teile
F) 0,2 bis 10 Gew.-Teile
betragen und wobei die Summe der Gewichtsteile der Zusammensetzung auf 100 normiert ist.

**4.** Zusammensetzungen gemäß einem der vorherigen Ansprüche, **dadurch gekennzeichnet, dass** der Polyester aus aliphatischen oder aromatischen Diolen und als Dicarbonsäure nur aus Bernsteinsäure abgeleitet ist.

**5.** Zusammensetzungen gemäß Anspruch 4, **dadurch gekennzeichnet, dass** die Diole aliphatisch sind.

**6.** Zusammensetzungen gemäß Anspruch 5, **dadurch gekennzeichnet, dass** das Diol Butandiol ist.

**7.** Zusammensetzungen gemäß einem der vorherigen Ansprüche, **dadurch gekennzeichnet, dass** k für eine ganze Zahl von 1 bis 5 steht.

**8.** Zusammensetzungen gemäß einem der vorherigen Ansprüche, **dadurch gekennzeichnet, dass** der Anteil der Trimeren (k=1) 50 bis 98 mol.-% der Komponente C ist.

**9.** Zusammensetzungen gemäß einem der vorherigen Ansprüche, **dadurch gekennzeichnet, dass** der Anteil der Trimeren (k=1) 70 bis 85 mol.-% der Komponente C ist.

**10.** Zusammensetzungen gemäß einem der vorherigen Ansprüche, **dadurch gekennzeichnet, dass** die Komponente C ausgewählt ist aus der Gruppe, die Propoxyphosphazene, Phenoxyphosphazene, Methylphenoxyphosphazene, Aminophosphazene und Fluoralkylphosphazene umfasst.

**11.** Zusammensetzungen gemäß einem der vorherigen Ansprüche, **dadurch gekennzeichnet, dass** die gewichtsgemittelten Molekulargewichte Mw der Komponente B zwischen 40 und 500 kg/mol liegen, bestimmt durch Gel-Permeatations-Chromatographie gegen Polystyrol als Referenz.

**12.** Zusammensetzungen nach einem der vorhergehenden Ansprüche, enthaltend als Komponente F mindestens einen Zusatzstoff ausgewählt aus der Gruppe, die Flammschutzsynergisten, Antidrippingmittel, Gleit- und Entformungsmittel, Nukleiermittel, Stabilisatoren, Antistatika, Farbstoffe, Pigmente und Füll- und Verstärkungsstoffe umfasst.

**13.** Zusammensetzungen gemäß einem der vorherigen Ansprüche, **dadurch gekennzeichnet, dass** die Säurekomponente des Polyesters aus nachwachsenden Rohstoffen stammt.

**14.** Verwendung von Zusammensetzungen gemäß einem der Ansprüche 1 bis 13 zur Herstellung von spritzgegossenen oder thermogeformten Formkörper.

**15.** Formkörper erhältlich aus Zusammensetzungen gemäße einem der Ansprüche 1 bis 13.

## Claims

**1.** Composition comprising

A) at least one polymer selected from the group consisting of aromatic polycarbonate and aromatic polyester-carbonate,
B) at least one polyester, wherein the polyester is derived from succinic acid and optionally further dicarboxylic acids and aliphatic, cycloaliphatic, araliphatic or aromatic diols,
C) at least one cyclic phosphazene of structure (IV)

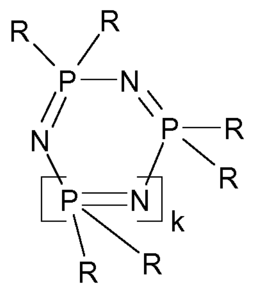

(IV),

wherein

R is in each case identical or different and represents

- an amine radical,
- in each case optionally halogenated $C_1$- to $C_8$-alkyl,
- $C_1$- to $C_8$-alkoxy
- in each case optionally alkyl- and/or halogensubstituted $C_5$- to $C_6$-cycloalkyl,
- in each case optionally alkyl- and/or halogen- and/or hydroxyl-substituted $C_6$- to $C_{20}$ -aryloxy,
- in each case optionally alkyl- and/or halogen- and/or bromine-substituted $C_7$- to $C_{12}$ -aralkyl,
- a halogen radical or
- an OH radical,

k is a whole number from 1 to 10,

D) optionally graft polymer,
E) optionally vinyl (co)polymer and/or polyalkylene terephthalate,
F) optionally additives.

**2.** Composition according to Claim 1, **characterized in that** the proportions of the components are as follows

A) 40 to 98 parts by weight
B) 1 to 60 parts by weight
C) 1 to 20 parts by weight
D) 0 to 20 parts by weight
E) 0 to 20 parts by weight
F) 0 to 30 parts by weight
and wherein the sum of the parts by weight of the composition is normalized to 100.

**3.** Composition according to any of the preceding claims, **characterized in that** the proportions of the components are as follows

A) 50 to 85 parts by weight
B) 5 to 45 parts by weight
C) 3 to 12 parts by weight
D) 0 to 10 parts by weight
E) 0 to 10 parts by weight
F) 0.2 to 10 parts by weight
and wherein the sum of the parts by weight of the composition is normalized to 100.

**4.** Composition according to any of the preceding claims, **characterized in that** the polyester is derived from aliphatic or aromatic diols and as the dicarboxylic acid only from succinic acid.

**5.** Composition according to Claim 4, **characterized in that** the diols are aliphatic.

**6.** Composition according to Claim 5, **characterized in that** the diol is butanediol.

**7.** Composition according to any of the preceding claims, **characterized in that** k is a whole number from 1 to 5.

**8.** Composition according to any of the preceding claims, **characterized in that** the proportion of the trimers (k=1) is from 50 to 98 mol% of the component C.

**9.** Composition according to any of the preceding claims, **characterized in that** the proportion of the trimers (k=1) is from 70 to 85 mol% of the component C.

**10.** Composition according to any of the preceding claims, **characterized in that** the component C is selected from the group comprising propoxyphosphazenes, phenoxyphosphazenes, methylphenoxyphosphazenes, aminophosphazenes and fluoroalkylphosphazenes.

**11.** Composition according to any of the preceding claims, **characterized in that** the weight-average molecular weights Mw of component B are between 40 and 500 kg/mol, determined by gel permeation chromatography against a polystyrene reference.

**12.** Composition according to any of the preceding claims, comprising as component F at least one additive selected from the group comprising flame retardant synergists, anti-dripping agents, lubricants and mould release agents, nucleating agents, stabilizers, antistats, dyes, pigments and fillers and reinforcing agents.

**13.** Composition according to any of the preceding claims, **characterized in that** the acid component of the polyester originates from renewable raw materials.

**14.** Use of compositions according to any of Claims 1 to 13 for producing injection-moulded or thermoformed moulded articles.

**15.** Moulded article obtainable from compositions according to any of Claims 1 to 13.

## Revendications

**1.** Compositions, contenant :

A) au moins un polymère choisi dans le groupe constitué par un polycarbonate aromatique et un polyester-carbonate aromatique,
B) au moins un polyester, le polyester étant dérivé d'acide succinique et éventuellement d'autres acides dicarboxyliques, ainsi que de diols aliphatiques, cycloaliphatiques, araliphatiques ou aromatiques,
C) au moins un phosphazène cyclique de structure (IV)

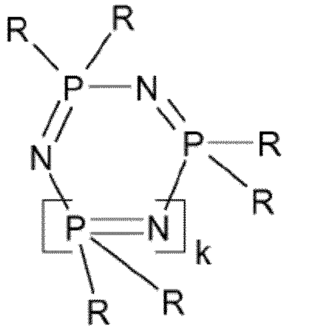

(IV),

dans laquelle

R est à chaque fois identique ou différent, et représente

- un radical amino,
- un alkyle en $C_1$ à $C_8$ à chaque fois éventuellement substitué,
- un alcoxy en $C_1$ à $C_8$,
- un cycloalkyle en $C_5$ à $C_6$ à chaque fois éventuellement substitué par alkyle et/ou halogène,
- un aryloxy en $C_6$ à $C_{20}$ à chaque fois éventuellement substitué par alkyle et/ou halogène et/ou hydroxy,
- un aralkyle en $C_7$ à $C_{12}$ à chaque fois éventuellement substitué par alkyle et/ou halogène et/ou brome,
- un radical halogène ou
- un radical OH,

k représente un nombre entier de 1 à 10,

D) éventuellement un polymère greffé,
E) éventuellement un (co)polymère de vinyle et/ou un polytéréphtalate d'alkylène,
F) éventuellement des additifs.

2. Compositions selon la revendication 1, **caractérisées en ce que** les proportions des composants sont :

A) 40 à 98 parties en poids,
B) 1 à 60 parties en poids,
C) 1 à 20 parties en poids,
D) 0 à 20 parties en poids,
E) 0 à 20 parties en poids,
F) 0 à 30 parties en poids,
et la somme des parties en poids de la composition est normée à 100.

3. Compositions selon l'une quelconque des revendications précédentes, **caractérisées en ce que** les proportions des composants sont :

A) 50 à 85 parties en poids,
B) 5 à 45 parties en poids,
C) 3 à 12 parties en poids,
D) 0 à 10 parties en poids,
E) 0 à 10 parties en poids,
F) 0,2 à 10 parties en poids,
et la somme des parties en poids de la composition est normée à 100.

4. Compositions selon l'une quelconque des revendications précédentes, **caractérisées en ce que** le polyester est dérivé de diols aliphatiques ou aromatiques et uniquement d'acide succinique en tant qu'acide dicarboxylique.

5. Compositions selon la revendication 4, **caractérisées en ce que** les diols sont aliphatiques.

6. Compositions selon la revendication 5, **caractérisées en ce que** le diol est le butanediol.

7. Compositions selon l'une quelconque des revendications précédentes, **caractérisées en ce que** k représente un nombre entier de 1 à 5.

8. Compositions selon l'une quelconque des revendications précédentes, **caractérisées en ce que** la proportion de trimères (k = 1) est de 50 à 98 % en moles du composant C.

9. Compositions selon l'une quelconque des revendications précédentes, **caractérisées en ce que** la proportion de trimères (k = 1) est de 70 à 85 % en moles du composant C.

10. Compositions selon l'une quelconque des revendications précédentes, **caractérisées en ce que** le composant C est choisi dans le groupe qui comprend les propoxyphosphazènes, les phénoxyphosphazènes, les méthylphénoxyphosphazènes, les aminophosphazènes et les fluoroalkylphosphazènes.

11. Compositions selon l'une quelconque des revendications précédentes, **caractérisées en ce que** les poids moléculaires moyens en poids Mw du composant B sont situés entre 40 et 500 kg/mol, déterminés par chromatographie par perméation de gel par rapport à du polystyrène en tant que référence.

12. Compositions selon l'une quelconque des revendications précédentes, contenant en tant que composant F au moins un additif choisi dans le groupe qui comprend les synergistes ignifuges, les agents anti-égouttement, les agents lubrifiants et démoulants, les agents de nucléation, les stabilisateurs, les antistatiques, les colorants, les pigments et les charges et les matières renforçantes.

13. Compositions selon l'une quelconque des revendications précédentes, **caractérisées en ce que** le composant acide du polyester provient de matières premières renouvelables.

14. Utilisation de compositions selon l'une quelconque des revendications 1 à 13 pour la fabrication de corps moulés par injection ou thermoformés.

15. Corps moulé pouvant être obtenu à partir de compositions selon l'une quelconque des revendications 1 à 13.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 7324159 A
- JP 2011016960 A
- JP 2005008671 A
- US 2011009531 A1
- US 2009209695 A1
- EP 0707047 A2
- US 2013317142 A1
- DE S1495626 A
- DE 2232877 A
- DE 2703376 A
- DE 2714544 A
- DE 3000610 A
- DE 3832396 A
- DE 3077934 A
- WO 2004063249 A1
- WO 200105866 A1
- WO 2000105867 A
- US 5340905 A
- US 5097002 A
- US 5717057 A
- DE 2842005 A
- US 3419634 A
- DE 3334782 A
- DE 2940024 A
- DE 3007934 A
- DE 1900270 A1
- US 3692744 A
- EP 728811 A
- DE 1961668 A
- WO 9740092 A
- DE OS2035390 A
- US PS3644574 A
- DE OS2248242 A
- GB PS1409275 A
- US 4937285 P
- US 2891920 A
- US 3294725 A
- DE OS3704657 A
- DE OS3704655 A
- DE OS3631540 A
- DE OS3631539 A
- US 5807914 A
- EP 430134 A
- US 4888388 A
- DE 2407674 A
- DE 2407776
- DE 2715932
- DE 1900270 A


### In der Beschreibung aufgeführte Nicht-Patentliteratur


- **ULLMANNS.** Enzyklopädie der Technischen Chemie. 1980, vol. 19, 280 ff
- Ullmann's Encyclopedia of Industrial Chemistry. VCH-Verlag, 1992, vol. A21, 635, , 656
- **M. HOFFMANN ; H. KRÖMER ; R. KUHN.** Polymeranalytik I und II. Georg Thieme-Verlag, 1977
- **W. SCHOLTAN ; H. LANGE.** *Kolloid, Z. und Z. Polymere,* 1972, vol. 250, 782-1796
- Kunststoff-Handbuch. Karl-Hanser-Verlag, 1973, vol. VIII, 695 FF